# EUROPÄISCHE PATENTSCHRIFT

(11) **EP 4 499 386 B1**
(45) Veröffentlichungstag und Bekanntmachung des Hinweises auf die Patenterteilung: **10.09.2025**
(21) Anmeldenummer: 23710185.2
(22) Anmeldetag: 08.03.2023
(51) Int. Cl.: B29C 51/00, B29C 51/02, B29C 55/06, B29C 55/00, B29K 67/00, B29C 51/04, B29C 55/14, B29C 51/42, B29C 35/02, B29C 49/78

(54) **VERFAHREN ZUR HERSTELLUNG WARMGEFORMTER KUNSTSTOFFTEILE AUS POLYETHYLENTEREPHTHALAT**
METHOD FOR PRODUCING THERMOFORMED PLASTICS PARTS FROM POLYETHYLENE TEREPHTHALATE
PROCÉDÉ DE PRODUCTION DE PIÈCES EN PLASTIQUE THERMOFORMÉES À PARTIR DE POLYÉTHYLÈNE TÉRÉPHTALATE

(30) Priorität: 25.03.2022 AT 501962022
(43) Veröffentlichungstag der Anmeldung: 05.02.2025
(73) Patentinhaber: Thermapet Technologies Pte. Ltd., Singapore 068914 (SG)
(72) Erfinder: BAMBERGER, Florian, 5120 St. Pantaleon (AT)
(74) Vertreter: Hübscher & Partner Patentanwälte GmbH
(86) Internationale Anmeldenummer: PCT/AT2023/060066
(87) Internationale Veröffentlichungsnummer: WO 2023/178369

(56) Entgegenhaltungen:
- EP-B1- 0 138 897
- WO-A1-2021/125236
- CN-A- 105 219 032
- JP-A- 2003 276 080
- KR-B1- 101 961 002
- US-B2- 8 163 217

## Beschreibung

### Technisches Gebiet

Die Erfindung bezieht sich auf ein Verfahren zur Herstellung warmgeformter und vollständig sortenrein rezyklierbarer Kunststoffteile aus keimbildnerfreiem amorphem Polyethylenterephthalat.

### Stand der Technik

US 8 163 217 B2 offenbart ein Verfahren zur Herstellung warmgeformter und rezyklierbarer Kunststoffteile aus Polyethylenterephthalat, wobei in einem Zuführschritt zunächst ein, insbesondere folien- oder plattenförmiges, Halbzeug mit vorgegebener Halbzeugbreite in einer parallel zur Halbzeuglängsrichtung verlaufenden Maschinenrichtung (MD) einem Bearbeitungsabschnitt einer ein Warmformwerkzeug umfassenden Warmformvorrichtung zugeführt und dort anschließend in wenigstens einem Erwärmungsschritt auf eine Verstreckungstemperatur von 90 - 180°C erwärmt sowie in wenigstens einem Verstreckungsschritt in Abhängigkeit der eingestellten Verstreckungstemperatur bei einem Verstreckungsgrad von 1,2 - 5,0 in Maschinenrichtung (MD) aktiv verstreckt wird, wobei der wenigstens eine Erwärmungsschritt zeitgleich zum wenigstens einen Verstreckungsschritt oder diesem zeitlich vorausgehend erfolgt, und wonach in einem Formungsschritt das im Bearbeitungsabschnitt verstreckte Halbzeug mithilfe des gekühlten Warmformwerkzeuges ausgeformt wird.

EP 0 138 897 B1 offenbart ein Verfahren mit einer Abschreckung auf eine Temperatur von wenigstens 30 °C unterhalb der Glasübergangstemperatur.

JP 2003 276080, WO 2021/125236 A1, CN 105 219 032 A und KR 101 961 002 B1 offenbaren weitere Verfahren und davon hergestellte Gegenstände.

Zur Herstellung von Kunststoffteilen wie beispielsweise Kunststoffbecher oder Kunststoffbehälter kommen in der Regel Herstellungsverfahren zum Einsatz, die als Warmform - bzw. Thermoformverfahren bekannt sind. Im Zusammenhang mit Polyethylenterephthalat (PET) wird beispielsweise ein folien- oder plattenförmiges Kunststoffhalbzeug zunächst auf bis zu 90 °C vorgewärmt, anschließend über ein Transportsystem einer Warmformvorrichtung zugeführt und dort üblicherweise in zwei Schritten ausgeformt. In einem ersten Schritt wird das PET Halbzeug schrittweise auf über 200 °C erhitzt, um die Voraussetzung für eine wärmeinduzierte Kristallisation zu schaffen und dadurch letztlich eine hohe Temperaturbeständigkeit der Behälter zu erreichen. Das Halbzeug wird weiters in einem Warmformwerkzeug ausgeformt, wonach in einem zweiten Schritt das Halbzeug in einem gekühlten Warmformwerkzeug rasch abgekühlt wird. Aufgrund dieser Maßnahmen kann eine Kristallisation des PET zur Verbesserung der mechanischen Eigenschaften erreicht werden, unter anderem eine Temperaturbeständigkeit von wenigstens 120 °C. Um derartige Verfahren allerdings wirtschaftlich gestalten zu können, müssen dem PET bereits beim Extrusionsprozess der entsprechenden Halbzeuge Keimbildner, z.B. in Form von keimbildenden anorganischen Füllstoffpartikeln und / oder polymerbasierten Nukleierungsmitteln zugegeben werden, um die wärmeinduzierte Kristallisationszeit zu minimieren, welche andernfalls, in Abhängigkeit vom Zielprodukt, über 15 Sekunden betragen würde. Durch den Einsatz solcher Additive wird jedoch die Wiederverwertung erschwert, weil keine sortenreine Rezyklierung möglich ist. Ein weiterer Nachteil besteht außerdem darin, dass kristallisationsbedingt lediglich die Herstellung opaker, nicht jedoch transparenter Kunststoffteile aus PET möglich ist.

Darüber hinaus sind Warmformverfahren bekannt, die unter Einsatz von amorphem PET auch die Herstellung transparenter Kunststoffteile ermöglichen. Nachteilig daran ist allerdings, dass derartig hergestellte Kunststoffteile hinsichtlich ihrer geringen Warmformbeständigkeit bis maximal 60 - 70 °C sowie ihrer unerwünschten Schrumpfungsneigung bei Temperaturen ab 62 °C nicht für den Einsatz in Mikrowellen geeignet sind.

Ferner existieren Verfahren zu Herstellung sogenannter biaxial orientierter PET-Folien, wobei eine PET-Folie zunächst auf bis zu 90 °C vorgewärmt und anschließend biaxial, also sowohl in Maschinenrichtung als auch in Querrichtung durch eine entsprechende Reckvorrichtung verstreckt wird. Dabei sind dem PET üblicherweise Hilfsstoffe beigemengt, die das in der Regel mithilfe eines Infrarot-Heizstrahlers erfolgende Aufheizen des Streckspaltes erleichtern sollen. Durch das Verstrecken wird eine Kristallisation des PET zur gezielten Beeinflussung des Eigenschaftsprofils der Folie induziert. Im Zuge einer thermischen Nachbehandlung wird die PET-Folie in weiterer Folge auf bis zu 200 °C oder höher aufgeheizt. Dadurch werden kristallisationsbedingte Eigenspannungen in der Folie abgebaut, wodurch die Schrumpfungsneigung reduziert werden kann. Aufgrund der notwendigen thermischen Nachbehandlung und der damit verbundenen hohen Temperaturen ist allerdings ein dementsprechend hoher Energieaufwand erforderlich.

### Darstellung der Erfindung

Es besteht somit der Bedarf, ein Verfahren der eingangs geschilderten Art zu schaffen, das trotz wirtschaftlichen Taktzeiten und bei verhältnismäßig geringem Energieaufwand die Herstellung warmgeformter, sortenrein rezyklierbarer Kunststoffteile ermöglicht, die bei ausreichender, optisch ansprechender Transparenz auch für den Einsatz in Mikrowellen bzw. für Anwendungen mit einer hierfür erforderlichen Temperaturbeständigkeit von 120 - 145 °C geeignet sind.

Die Erfindung löst die gestellte Aufgabe dadurch, dass in einem Zuführschritt zunächst ein, insbesondere folien- oder plattenförmiges Halbzeug mit vorgegebener Halbzeugbreite in einer parallel zur Halbzeuglängsrichtung verlaufenden Maschinenrichtung einem Bearbeitungsabschnitt einer ein Warmformwerkzeug umfassenden Warmformvorrichtung zugeführt und dort anschließend in wenigstens einem Erwärmungsschritt auf eine Verstreckungstemperatur von 90 - 180°C erwärmt sowie in wenigstens einem Verstreckungsschritt in Abhängigkeit der eingestellten Verstreckungstemperatur bei einem Verstreckungsgrad von 1,2 - 5,0 in Maschinenrichtung aktiv verstreckt wird, wonach in einem Formungsschritt das im Bearbeitungsabschnitt verstreckte Halbzeug mithilfe des gekühlten Warmformwerkzeuges ausgeformt und dabei auf eine Temperatur von wenigstens 30 °C unterhalb der Glasübergangstemperatur des verwendeten Polyethylenterephthalats abgeschreckt wird. Vorzugsweise weist zu diesem Zweck das Warmformwerkzeug eine Werkzeugtemperatur von 15 - 20 °C auf. Der Verstreckungsgrad von 1,2 - 5,0 bedeutet, dass das Halbzeug im Bearbeitungsabschnitt bezogen auf eine ursprüngliche Referenzlänge auf die 1,2 - 5-fache Länge verstreckt wird. Der Verstreckungsgrad kann alternativ auch in Prozent angegeben werden, wobei bei einer mit 100 % definierten Referenzlänge der Verstreckungsgrad demgemäß 120 - 500 % beträgt.

### Wege zur Ausführung der Erfindung

Der Erfindung liegt die Erkenntnis zugrunde, dass im Falle von amorphem, keimbildnerfreien PET die Kombination wenigstens eines Verstreckungsschrittes in Maschinenrichtung bei einem Verstreckungsgrad von 1,2 - 5,0, bevorzugt 3,0 - 5,0, noch bevorzugter 3,5 - 4,5, besonders bevorzugt 4,4 sowie wenigstens eines Erwärmungsschrittes auf eine Verstreckungstemperatur von 90 - 180°C, bevorzugt 90 - 160 °C, noch bevorzugter 90 - 145 °C, noch bevorzugter 120 - -145 °C, noch bevorzugter 120 - 140 °C, noch bevorzugter 125 - 135 °C und besonders bevorzugt 130 °C vorteilhafte Kristallisationsbedingungen im Hinblick auf eine geringe Schrumpfungsneigung sowie auf eine ausreichende Transparenz des hergestellten Kunststoffteiles ermöglicht. Die Verstreckungstemperatur bezieht sich dabei insbesondere auf die Kerntemperatur des Halbzeuges.

So hat sich überraschenderweise gezeigt, dass die durch den wenigstens einen in Maschinenrichtung erfolgenden Verstreckungsschritt ausgelöste dehnungsinduzierte Kristallisation in Kombination mit dem wenigstens einen Erwärmungsschritt eine besonders feinkörnige lamellare Kristallstruktur bewirkt, die durch die unmittelbar an den wenigstens einen Verstreckungsschritt anschließende Abkühlung bzw. Abschreckung im Formungsschritt auf eine Temperatur von wenigstens 30 °C unterhalb der Glasübergangstemperatur des verwendeten PET fixiert werden kann. Je nach Dicke bzw. Stärke des Halbzeugs bzw. der fertigen Kunststoffteile kann grundsätzlich auch vorgesehen sein, dass nach dem wenigstens einen Verstreckungsschritt in einem Nachwärmschritt ein kurzes aber intensives Aufwärmen des verstreckten Halbzeugs bei einer Temperatur von 120 - 200 °C, bevorzugt 130 - 200 °C, noch bevorzugter 140 - 200 °C, besonders bevorzugt 160 - 180 °C, erfolgt, um die Kristallisationsbedingungen für eine Temperaturbeständigkeit des Kunststoffteils von 120 - 145 °C weiter zu verbessern. Je höher die diesbezüglich gewählte Temperatur ist, desto geringer ist dementsprechend die Verweilzeit im Nachwärmschritt. Insbesondere kann auch vorgesehen sein, dass dem wenigstens einen Verstreckungsschritt der Nachwärmschritt unmittelbar folgt, wonach unmittelbar der Formungsschritt anschließt. Der Nachwärmschritt bewirkt nicht nur eine weiter verbesserte Temperaturbeständigkeit des fertigen Kunststoffteiles, sondern es wird durch das Nachwärmen auch eine bessere Formbarkeit des Halbzeuges im Formungsschritt ermöglicht.

Grundsätzlich kann eine zusätzliche aktive Verstreckung des Halbzeuges im Bearbeitungsabschnitt auch in einer quer zur Maschinenrichtung bzw. entlang der Halbzeugbreite verlaufenden Querrichtung erfolgen. Vorzugsweise erfolgt eine aktive Verstreckung jedoch ausschließlich in Maschinenrichtung, während das Halbzeug im Bearbeitungsabschnitt bezüglich der Halbzeugbreite festgelegt wird. Aufgrund dessen, dass das Halbzeug bezüglich seiner Halbzeugbreite festgelegt bleibt, wird beim aktiven Verstrecken in Maschinenrichtung ein normalerweise eintretender Einsprung des Halbzeugs, d.h. eine Abnahme der Halbzeugbreite zufolge der Längsverstreckung in Maschinenrichtung, unterbunden. Somit wird zusätzlich zur aktiven Verstreckung in Maschinenrichtung eine leichte passive Verstreckung in Querrichtung erzwungen, die zusammen mit der aktiven Verstreckung in Maschinenrichtung die Ausbildung der feinkörnigen lamellaren Kristallstrukturen begünstigt. Vorzugsweise kann vorgesehen sein, dass im wenigstens einen Verstreckungsschritt das Halbzeug im Bearbeitungsabschnitt an den sich in Querrichtung gegenüberliegenden Halbzeugrändern festgelegt wird. Unter einer aktiven Verstreckung wird im Sinne der Erfindung verstanden, dass durch die aktive Bewegung wenigstens eines am Halbzeug befestigbaren Halteelementes einer Streckeinrichtung Streckkräfte, insbesondere Zugkräfte, in das Halbzeug so eingeleitet werden, dass das Halbzeug parallel zur Bewegungsrichtung des Haltelementes verstreckt wird. Demgegenüber erfolgt ein passives Verstrecken in Querrichtung als zwangsläufiger Nebeneffekt einer aktiven Verstreckung in Maschinenrichtung, wenn das Halbzeug bezüglich seiner Halbzeugbreite festgelegt wird.

Grundsätzlich kann im Bearbeitungsabschnitt zunächst auch eine Überstreckung des Halbzeugs in Maschinenrichtung erfolgen, wonach man das Halbzeug nach der Molekülorientierungsphase in einem Schrumpfungsschritt wieder etwas schrumpft, bevor schließlich der Formungsschritt erfolgt. Dadurch können die vorteilhaften Kristallisationseffekte weiter erhöht werden, weil sich durch diese Maßnahme die kristallinen Ketten des PET Materials in noch geordneteren und damit für die Materialeigenschaften des Produkts noch vorteilhafteren Strukturen ausgerichtet werden. Vorzugsweise sollte die Überstreckung so erfolgen, dass die im Schrumpfungsschritt anschließende Schrumpfung des Halbzeugs in Maschinenrichtung vor dem Formungsschritt höchstens 20 %, bevorzugt 1 bis 20 %, noch bevorzugter 5 bis 15 %, noch bevorzugter 7 bis 13 %, besonders bevorzugt 10 bis 12 %, beträgt. Vorzugsweise folgt unmittelbar auf den wenigstens einen Verstreckungsschritt der Schrumpfungsschritt, wonach unmittelbar der Formungsschritt anschließt.

Die zu wählende Schrumpfung ist insbesondere davon abhängig, mit welcher Verstreckung bzw. welchen Verstreckungen sowie mit welcher Verstreckungsrate bzw. welchen Verstreckungsraten im wenigstens einen Verstreckungsschritt das plattenförmige Halbzeug verstreckt wurde und/oder welche Dicke bzw. Stärke des plattenförmigen Halbzeugs nach dem wenigstens einen Verstreckungsschritt vorliegt. Beträgt die Stärke des plattenförmigen Halbzeugs nach dem Verstecken beispielsweise 1,2 mm, erfolgt eine Schrumpfung von vorzugsweise 10 % im Schrumpfungsschritt. Bei einer Stärke des plattenförmigen Halbzeugs von beispielsweise 1,5 mm nach dem Verstecken erfolgt eine Schrumpfung von vorzugsweise 12 % im Schrumpfungsschritt.

Der Schrumpfungsschritt kann grundsätzlich bei einer Temperatur von 120 - 200 °C, bzw. gemäß den bevorzugten Temperaturbereichen wie oben im Nachwärmschritt angegeben, erfolgen. Insbesondere kann der Schrumpfungsschritt bei einer Temperatur von 120 - 160 °C, noch bevorzugter bei einer Temperatur von 130 - 140 °C erfolgen.

Die aktive Verstreckung des Halbzeuges in Maschinenrichtung kann wie oben beschrieben grundsätzlich über eine gesonderte Streckeinrichtung erfolgen, welche die diesbezüglichen Streckkräfte beispielsweise über die Stirnseite des Halbzeugs, d.h. über die von den in Querrichtung gegenüberliegenden Halbzeugrändern begrenzte Halbzeugfront einleitet. Besonders günstige Prozessbedingungen ergeben sich allerdings, wenn die Halbzeugränder im Bearbeitungsabschnitt an Befestigungskluppen fixiert und zwangsgeführt werden und wobei über die Befestigungskluppen Streckkräfte zur aktiven Verstreckung in Maschinenrichtung in das Halbzeug eingeleitet werden. Zufolge dieser Maßnahmen erfolgt sowohl das Festlegen des Halbzeuges bezüglich seiner Halbzeugbreite, als auch das Einleiten der Streckkräfte zur aktiven Verstreckung in Maschinenrichtung ausschließlich über Befestigungskluppen, die den in Querrichtung gegenüberliegenden Halbzeugrändern zugeordnet sind.

Beispielsweise kann vorgesehen sein, dass die Befestigungskluppen über ein bekanntes kettenbasiertes Transportsystem geführt und bewegt werden. Dabei kann das Transportsystem so ausgebildet sein, dass die Befestigungskluppen zu Beginn des Bearbeitungsabschnittes an die Halbzeugränder angestellt werden und diese festhalten. Nach erfolgtem Verstrecken geben die Befestigungskluppen die Halbzeugränder am Ende des Bearbeitungsabschnittes wieder frei und werden über das Transportsystem abgeführt. Es versteht sich von selbst, dass alternativ zu den Befestigungskluppen grundsätzlich auch andere geeignete lösbare Halteelemente eingesetzt werden können, die mithilfe eines Transportsystems an die Halbzeugränder angestellt werden sowie diese festhalten und wieder freigeben können.

Die durch das erfindungsgemäße Verfahren hergestellten Kunststoffteile können bei einer Gebrauchstemperatur von 120 °C eine Schrumpfung von höchstens 0,5 % aufweisen. Folglich ermöglichen die erfindungsgemäßen Maßnahmen, dass eine energieintensive thermische Nachbehandlung nach dem Verstreckschritt zum Abbau etwaiger kristallisationsbedingter Eigenspannungen ausbleiben kann. Je nach Prozessbedingungen können erfindungsgemäß hergestellte Kunststoffteile einen Haze-Wert gemäß ASTM D 1003 von höchstens 1 % aufweisen. Insgesamt wird durch das erfindungsgemäße Verfahren die Herstellung von Kunststoffteilen ermöglicht, die sowohl für den Mikrowelleneinsatz ausreichend temperaturbeständig, insbesondere wärmeformbeständig sind, als auch aufgrund ihrer ausreichenden Transparenz ein optisch ansprechendes Erscheinungsbild aufweisen. Es hat sich außerdem gezeigt, dass die erfindungsgemäß dehnungsinduzierte Kristallisationsrate trotz fehlender Keimbildner im PET bei ausreichender Geschwindigkeit abläuft, sodass die für bekannte Warmformverfahren üblichen Taktzeiten im Wesentlichen eingehalten werden können. Aufgrund dessen, dass dem verwendeten PET keine Keimbildner oder Hilfsstoffe zur Verbesserung der Aufheizeffizienz zugesetzt werden, können die durch das erfindungsgemäße Verfahren erhaltenen Kunststoffteile einer im Wesentlichen sortenrein Rezyklierung zugeführt werden

Das erfindungsgemäße Verfahren kann je nach Bedarf in Abhängigkeit der ursprünglichen Halbzeugstärke- bzw. dicke, die zur Herstellung mikrowellentauglicher Kunststoffbehälter beispielsweise 2,5-3,5 mm beträgt, hinsichtlich der Verstreckungstemperatur, des Verstreckungsgrades, der Verstreckungsrate, der Abkühlrate, der Verweilzeit im Warmformwerkzeug etc. sowie ggf. hinsichtlich der Temperatur und Verweilzeit während des Nachwärmschrittes und der Temperatur, der Verweilzeit und der Schrumpfung während des Schrumpfungsschrittes, entsprechend angepasst werden. Ebenso ist die Anzahl sowie zeitliche Abfolge bzw. Reihenfolge der jeweiligen Erwärmungs- und Verstreckungsschritte je nach Bedarf entsprechend anpassbar. Beispielsweise kann der wenigstens eine Erwärmungsschritt zeitgleich zum wenigstens einen Verstreckungsschritt erfolgen. Besonders günstige Bedingungen ergeben sich allerdings grundsätzlich, wenn der wenigstens eine Erwärmungsschritt dem wenigstens einen Verstreckungsschritt zeitlich vorausgeht, also dass zunächst der Erwärmungsschritt und danach der Verstreckungsschritt erfolgt.

Zur Verringerung der Taktzeit können grundsätzlich auch der Zuführschritt und der wenigstens eine Verstreckungsschritt zeitgleich erfolgen.

Für günstige Kristallisationsbedingungen kann in Abhängigkeit der ursprünglichen Halbzeugstärke- bzw. dicke im wenigstens einen Verstreckungsschritt das aktive Verstrecken des Halbzeugs in Maschinenrichtung bei einer Verstreckungsrate von 50 - 400 % pro Sekunde, vorzugsweise von 90 - 350 % pro Sekunde, noch bevorzugter von 200 - 350 % pro Sekunde erfolgen. Grundsätzlich gilt, dass bei einer Erhöhung der Verstreckungstemperatur auch eine Erhöhung der Verstreckungsrate erfolgen sollte und umgekehrt.

Die Verstreckungsrate sollte grundsätzlich so schnell eingestellt werden, wie es das vorliegende Material in Abhängigkeit der entsprechenden Materialstärke etc. erlaubt. Je schneller die Molekülorientierung des PET Materials zufolge der Verstreckung erfolgt, desto hoher ist später der Wärmeenergiebedarf, um beim fertig ausgeformten Endprodukt einen Schrumpfungsvorgang zu induzieren.

Dementsprechend kann durch höhere Verstreckungsraten die Temperaturbeständigkeit des Endprodukts erhöht werden. Zur Durchführung eines erfindungsgemäßen Verfahrens können grundsätzlich bekannte Kunststoff-Warmformvorrichtungen verwendet werden, die beispielsweise neben einem Warmformwerkzeug auch ein entsprechendes Zuführ- bzw. Transportsystem für das Halbzeug sowie gegebenenfalls eine Ausstanzeinrichtung zum Ausstanzen der ausgeformten Kunststoffteile umfassen.

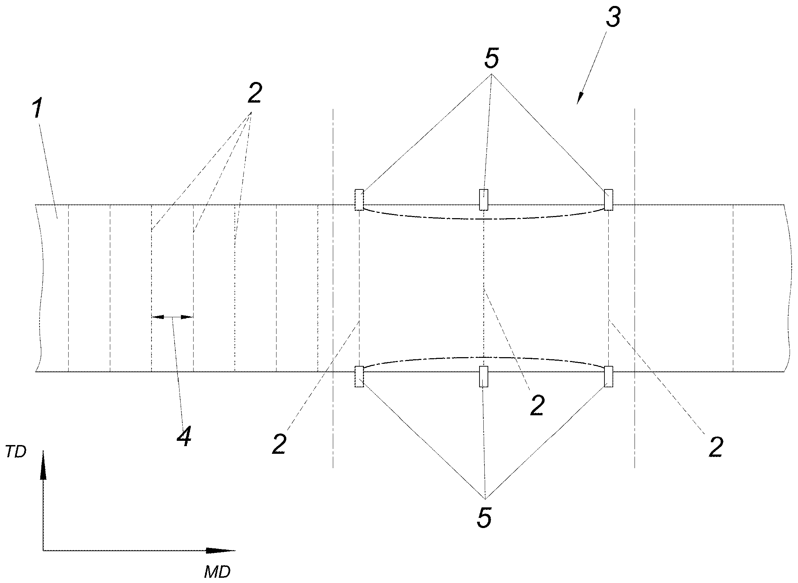

In der Zeichnung ist der Erfindungsgegenstand beispielsweise dargestellt und zwar in einer schematischen Draufsicht auf ein in einem Bearbeitungsabschitt einer Warmformvorrichtung verstrecktes Halbzeug.

Ein erfindungsgemäßes Verfahren wird beispielsweise zur Herstellung warmgeformter Behälter aus keimbildnerfreiem, amorphem PET eingesetzt. Derartige Behälter weisen einen Haze-Wert gemäß ASTM D 1003 von höchstens 1 % sowie eine Schrumpfung bei einer Gebrauchstemperatur von 120 °C von höchstens 0,5 % auf. Dementsprechend weisen die Behälter eine optisch ansprechende Transparenz auf und sind außerdem für den Einsatz in Mikrowellen geeignet. Dadurch, dass dem verwendeten PET keine Keimbildner oder Hilfsstoffe zur Verbesserung der Aufheizeffizienz zugesetzt werden, können die durch das erfindungsgemäße Verfahren erhaltenen Becher am Ende ihrer Lebensdauer einer im Wesentlichen sortenrein Rezyklierung zugeführt werden.

Die Zeichnung zeigt ein schematisch dargestelltes, als PET-Folie ausgebildetes Halbzeug 1. Das Halbzeug 1 kann grundsätzlich als Endlosrolle bzw. Endlosfolienband zugeführt werden. Die bezüglich der Halbzeugbreite in einer Querrichtung TD verlaufenden strichlierten Referenzlinien 2 am Halbzeug 1 sollen veranschaulichen, dass das Halbzeug 1 in einem Bearbeitungsabschnitt 3 einer nicht näher dargestellten Warmformvorrichtung in einer parallel zur Halbzeuglängsrichtung verlaufenden Maschinenrichtung MD verstreckt wird. Der Bearbeitungsanschnitt 3 wird mit zwei ebenfalls in Querrichtung TD verlaufenden, strichpunktierte Linien angedeutet. Im vorliegenden Ausführungsbeispiel wird das Halbzeug 1 bezüglich einer zwischen zwei Referenzlinien 2 definierten Referenzlänge 4 im Bearbeitungsabschnitt 3 bei einem Verstreckungsgrad von 4,4 bzw. 440 % in Maschinenrichtung **MD** verstreckt, wie dies am größeren Abstand zwischen den Referenzlinien 2 im Bearbeitungsabschnitt 3 erkennbar ist.

Das Halbzeug 1 wird im Bearbeitungsabschnitt 3 über schematisch angedeutete Befestigungskluppen 5 an den Halbzeugrändern gehalten, sodass das Halbzeug 1 bezüglich seiner Halbzeugbreite festgelegt wird. Über die beispielsweise mithilfe eines Kettentriebes im Bearbeitungsabschnitt 3 in Maschinenrichtung **MD** verfahrbaren Befestigungskluppen 5 werden Streckkräfte zur aktiven Verstreckung in Maschinenrichtung **MD** in das Halbzeug 1 eingeleitet. Eine ausschließliche aktive Verstreckung in Maschinenrichtung **MD** würde normalerweise einen Einsprung der PET-Folie, d.h. eine Abnahme der breite des Halbzeugs 1 bewirken, wie dies durch die strichpunktiert angedeutete Taillierung des Halbzeugs 1 im Bearbeitungsabschnitt 3 angedeutet wird. Dadurch, dass das Halbzeug 1 bezüglich seiner Halbzeugbreite festgelegt bleibt, wird jedoch ein solcher Einsprung unterbunden. Folglich wird zusätzlich zur aktiven Verstreckung in Maschinenrichtung MD eine leichte passive Verstreckung in Querrichtung TD erzwungen. Die Befestigungskluppen werden am Beginn des Bearbeitungsabschnitt 3 an die Halbzeugränder angestellt, sodass diese von den Befestigungskluppen 5 gehalten werden. Nach dem Verstrecken geben die Befestigungskluppen 5 die Halbzeugränder am Ende des Bearbeitungsabschnittes 3 wieder frei. Grundsätzlich ist die Anzahl der eingesetzten Befestigungskluppen 5 bzw. lösbaren Haltelemente je nach gewünschten Prozessbedingungen und Produkteigenschaften frei wählbar. So kann es je nach Anwendungsfall für die Prozessbedingungen beispielsweise auch vorteilhaft sein, wenn im Bearbeitungsabschnitt 3 möglichst viele Befestigungskluppen 5 bzw. lösbare Halteelemente vorgesehen sind, sodass sich der eingestellte Gesamtverstreckungsgrad demzufolge aus mehreren kleineren Teilverstreckungen in Maschinenrichtung MD ergibt.

Zeitgleich zum Verstreckungsschritt oder diesem zeitlich vorausgehend erfolgt ein Erwärmungsschritt, wobei das Halbzeug 1 auf eine Verstreckungstemperatur von ca. 130 °C erwärmt wird. Unmittelbar nach dem Verstreckungsschritt wird in einem Formungsschritt das Halbzeug 1 mithilfe eines nicht näher dargestellten gekühlten Warmformwerkzeuges ausgeformt und dabei auf eine Temperatur von wenigstens 30 °C unterhalb der Glasübergangstemperatur des verwendeten PET abgeschreckt. Hierzu ist das wassergekühlte Warmformwerkzeug auf eine Werkzeugtemperatur von 15 °C temperiert.

Es kann alternativ auch vorgesehen sein, dass an den Verstreckungsschritt ein Nachwärmschritt unmittelbar anschließt, wobei ein kurzes intensives Aufwärmen des verstreckten Halbzeugs 1 bei einer Temperatur von 120 - 200 °C erfolgt. Unmittelbar an den der Nachwärmschritt schließt dann der Formungsschritt an.

Gemäß einer weiteren Alternative kann an den Verstreckungsschritt ein Schrumpfungsschritt anschließen, wobei das Halbzeug 1 in Maschinenrichtung MD eine Schrumpfung von höchstens 20 % erfährt. Dies kann bei einer Temperatur von 120 - 200 °C erfolgen. Unmittelbar an den der Schrumpfungsschritt schließt dann der Formungsschritt an.

Nach dem Formungsschritt wird das ausgeformte Halbzeug 1 in Maschinenrichtung MD weitertransportiert und einer Ausstanzeinrichtung zugeführt, wo die fertigen Kunststoffbehälter aus dem Halbzeug 1 ausgestanzt werden.

## Patentansprüche

1. Verfahren zur Herstellung warmgeformter und vollständig sortenrein rezyklierbarer Kunststoffteile aus keimbildnerfreiem, amorphem Polyethylenterephthalat, wobei in einem Zuführschritt zunächst ein, insbesondere folien- oder plattenförmiges, Halbzeug (1) mit vorgegebener Halbzeugbreite in einer parallel zur Halbzeuglängsrichtung verlaufenden Maschinenrichtung (MD) einem Bearbeitungsabschnitt (3) einer ein Warmformwerkzeug umfassenden Warmformvorrichtung zugeführt und dort anschließend in wenigstens einem Erwärmungsschritt auf eine Verstreckungstemperatur von 90 - 180°C erwärmt sowie in wenigstens einem Verstreckungsschritt in Abhängigkeit der eingestellten Verstreckungstemperatur bei einem Verstreckungsgrad von 1,2 - 5,0 in Maschinenrichtung (MD) aktiv verstreckt wird, wobei der wenigstens eine Erwärmungsschritt zeitgleich zum wenigstens einen Verstreckungsschritt oder diesem zeitlich vorausgehend erfolgt, und wonach in einem Formungsschritt das im Bearbeitungsabschnitt (3) verstreckte Halbzeug (1) mithilfe des gekühlten Warmformwerkzeuges ausgeformt und dabei auf eine Temperatur von wenigstens 30 °C unterhalb der Glasübergangstemperatur des verwendeten Polyethylenterephthalats abgeschreckt wird.

2. Verfahren nach Anspruch 1, **dadurch gekennzeichnet, dass** dem wenigstens einen Verstreckungsschritt der Formungsschritt unmittelbar folgt.

3. Verfahren nach Anspruch 1, **dadurch gekennzeichnet, dass** zwischen dem wenigstens einen Verstreckungsschritt und dem Formungsschritt ein Schrumpfungsschritt erfolgt, wobei das Halbzeug (1) in Maschinenrichtung (MD) eine Schrumpfung von höchstens 20 % erfährt.

4. Verfahren nach Anspruch 3, **dadurch gekennzeichnet, dass** der Schrumpfungsschritt bei einer Temperatur von 120 - 200 °C erfolgt.

5. Verfahren nach einem der Ansprüche 1 bis 4, **dadurch gekennzeichnet, dass** das Halbzeug (1) im Bearbeitungsabschnitt (3) ausschließlich in Maschinenrichtung (MD) aktiv verstreckt wird, während das Halbzeug (1) im Bearbeitungsabschnitt (3) bezüglich der Halbzeugbreite festgelegt wird.

6. Verfahren nach Anspruch 5, **dadurch gekennzeichnet, dass** im Verstreckungsschritt das Halbzeug (1) im Bearbeitungsabschnitt (3) an den sich in einer quer zur Maschinenrichtung (MD) verlaufenden Querrichtung (TD) gegenüberliegenden Halbzeugrändern festgelegt wird.

7. Verfahren nach Anspruch 5 oder 6, **dadurch gekennzeichnet, dass** die Halbzeugränder im Bearbeitungsabschnitt (3) an lösbaren Halteelementen, insbesondere Befestigungskluppen (5), fixiert und zwangsgeführt werden und dass über die Halteelemente Streckkräfte zur aktiven Verstreckung in Maschinenrichtung (MD) in das Halbzeug (1) eingeleitet werden.

8. Verfahren nach einem der Ansprüche 1 bis 7, **dadurch gekennzeichnet, dass** im Verstreckungsschritt das aktive Verstrecken des Halbzeugs (1) in Maschinenrichtung (MD) bei einer Verstreckungsrate von 50 - 400 % pro Sekunde, vorzugsweise von 90 - 350 % pro Sekunde, noch bevorzugter von 200 - 350 % pro Sekunde erfolgt.

## Claims

1. A method for the production of thermoformed plastic parts, which are made of nucleating agent-free amorphous polyethylene terephthalate and are fully pure grade recyclable, wherein, in a feed step, a semi-finished product (1), in particular in film or sheet form, having a predetermined semi-finished product width is first fed in a machine direction (MD) running parallel to the longitudinal direction of the semi-finished product to a processing section (3) of a thermoforming apparatus comprising a thermoforming tool, and is then heated in the thermoforming apparatus in at least one heating step to a stretching temperature of 90-180°C and, in at least one stretching step, is stretched as a function of the set stretching temperature at a degree of stretching of 1.2 - 5.0 in the machine direction (MD), wherein the at least one heating step is taking place simultaneously with the at least one stretching step or is preceding it in time, and then, in a forming step, the semi-finished product (1) stretched in the processing section (3) is formed with the aid of the cooled thermoforming tool and is quenched to a temperature of at least 30°C below the glass transition temperature of the polyethylene terephthalate used.

2. Method according to claim 1, **characterized in that** the at least one stretching step is immediately followed by the forming step.

3. Method according to claim 1, **characterized in that** a shrinking step takes place between the at least one stretching step and the forming step, wherein the semi-finished product (1) undergoes a shrinkage of at most 20% in the machine direction (MD).

4. Method according to claim 3, **characterized in that** the shrinking step takes place at a temperature of 120 - 200 °C.

5. Method according to one of claims 1 to 4, **characterized in that** the semi-finished product (1) is actively stretched in the processing section (3) exclusively in the machine direction (MD), while the semi-finished product (1) is fixed in the processing section (3) with respect to the semi-finished product width.

6. Method according to claim 5, **characterized in that** in the stretching step the semi-finished product (1) is fixed in the processing section (3) at the semi-finished product edges, which are opposite each other in a transverse direction (TD) and are extending transversely to the machine direction (MD).

7. Method according to claim 5 or 6, **characterized in that** the edges of the semi-finished product are fixed and positively guided in the machining section (3) on releasable holding elements, in particular fastening clips (5), and **in that** stretching forces for active stretching in the machine direction (MD) are introduced into the semi-finished product (1) via the holding elements.

8. Method according to any one of claims 1 to 7, **characterized in that** in the stretching step the active stretching of the semi-finished product (1) in the machine direction (MD) takes place at a stretching rate of 50-400% per second, preferably of 90-350% per second, more preferably of 200-350% per second.

## Revendications

1. Procédé destiné à produire des pièces en plastique thermoformées, recyclables et entièrement homogènes, à partir de polyéthylène téréphtalate amorphe exempt d'agent de nucléation, dans lequel, dans une étape d'alimentation, un produit semi-fini (1), en particulier sous forme de film ou de feuille avec une largeur de produit semi-fini prédéterminée, est d'abord alimenté dans une direction de machine (MD) s'étendant parallèlement à la direction longitudinale de produit semi-fini, vers une section de traitement (3) d'un dispositif de thermoformage comprenant un outil de thermoformage, puis dans au moins une étape de chauffage y est chauffé à une température d'étirage de 90 à 180°C et, dans au moins une étape d'étirage, est activement étiré dans la direction de machine (MD) à un degré d'étirage de 1,2 à 5,0 en fonction de la température d'étirage ajustée, dans lequel l'au moins une étape de chauffage est effectuée de manière simultanée à au moins une étape d'étirage ou temporellement avant celle-ci, et après quoi dans une étape de formage le produit semi-fini (1) étiré dans la section de traitement (3) est formé à l'aide de l'outil de thermoformage refroidi et ensuite refroidi à une température d'au moins 30°C inférieure à la température de transition vitreuse du polyéthylène téréphtalate utilisé.

2. Procédé selon la revendication 1, **caractérisé en ce que** l'au moins une étape d'étirage est immédiatement suivie de l'étape de formage.

3. Procédé selon la revendication 1, **caractérisé en ce que**, entre l'au moins une étape d'étirage et l'étape de formage, une étape de rétrécissement est effectuée, dans lequel le produit semi-fini (1) subit un rétrécissement au maximum de 20 % dans la direction de machine (MD).

4. Procédé selon la revendication 3, **caractérisé en ce que** l'étape de rétrécissement est effectuée à une température de 120 à 200 °C.

5. Procédé selon l'une des revendications 1 à 4, **caractérisé en ce que** le produit semi-fini (1) est étiré activement dans la section de traitement (3) exclusivement dans la direction de machine (MD), tandis que le produit semi-fini (1) est fixé dans la section de traitement (3) par rapport à la largeur de produit semi-fini.

6. Procédé selon la revendication 5, **caractérisé en ce que**, dans l'étape d'étirage, le produit semi-fini (1) est fixé dans la section de traitement (3) sur les bords de produit semi-fini qui sont opposés dans une direction transversale (TD) s'étendant transversalement à la direction de machine (MD).

7. Procédé selon la revendication 5 ou 6, **caractérisé en ce que** les bords de produit semi-fini sont fixés et guidés positivement dans la section de traitement (3) sur des éléments de retenue amovibles, en particulier des clips de fixation (5), et **en ce que** des forces d'étirement pour un étirage actif dans la direction de machine (MD) sont introduites dans le produit semi-fini (1) par l'intermédiaire des éléments de retenue.

8. Procédé selon l'une des revendications 1 à 7, **caractérisé en ce que**, dans l'étape d'étirage, l'étirage actif du produit semi-fini (1) dans la direction de machine (MD) est effectué à une vitesse d'étirage de 50 à 400 % par seconde, de préférence de 90 à 350 % par seconde, plus préférablement de 200 à 350 % par seconde.
